# EUROPEAN PATENT SPECIFICATION

(11) **EP 3 796 126 B1**
(45) Date of publication and mention of the grant of the patent: **25.10.2023**
(21) Application number: 20178308.1
(22) Date of filing: 04.06.2020
(51) Int. Cl.: G06F 1/16, E05D 3/18

(54) **HINGE MODULE AND PORTABLE ELECTRONIC DEVICE**
SCHARNIERMODUL UND TRAGBARE ELEKTRONISCHE VORRICHTUNG
MODULE DE CHARNIÈRE ET DISPOSITIF ÉLECTRONIQUE PORTABLE

(30) Priority: 17.09.2019 TW 108133419
(43) Date of publication of application: 24.03.2021
(73) Proprietor: Acer Incorporated, New Taipei City 221 (TW)
(72) Inventor: Huang, Yi-Ta, New Taipei City 221 (TW); Ling, Cheng-Nan, New Taipei City 221 (TW); Tai, Wen-Chieh, New Taipei City 221 (TW); Lee, Wu-Chen, New Taipei City 221 (TW); Chuang, Kun-You, New Taipei City 248 (TW)
(74) Representative: 2K Patentanwälte Blasberg Kewitz & Reichel

(56) References cited:
- US-A1- 2016 320 811
- US-A1- 2019 171 255

## Description

### BACKGROUND

### Technical Field

The disclosure relates to a hinge module and a portable electronic device.

### Description of Related Art

Portable computing devices, such as palmtop computers, portable computers, notebook computers, and personal digital assistants (PDAs) have become more and more popular. In general, a portable electronic device includes a base and a display assembly configured for the display of the base to comply with user operation and viewing purposes. In particular, as touch display technology advances through time, for portable computers, touch screens have gradually become the basic equipment.

In general, to provide the user with a favorable visual effect as well as designing notebook computers to be lighter, thinner, more compact, and smaller, pursuing a higher screen-to-body ratio or a slim bezel has now become the trend in notebook computer design. Accordingly, the hinge of notebook computers needs to adopt a sunken design to cope with such needs. In other words, the hinge is designed to generate a motion of moving downward relative to the device body while simultaneously rotating the device body as well as moving the screen toward the device body where the system is located.

However, limited by the rotating radius of the hinge, if the above needs are to be coped with, interference between device bodies may easily occur during the rotating process, making it difficult to achieve a favorable effect.

US 2016/320811 A1 discloses a generic hinge module and a portable electronic device comprising such a hinge module. A first bracket of the hinge module is mounted to a pivotable lid of the electronic device, whereas a second arc-shaped bracket of the hinge module is mounted to the base of the electronic device. A first rotating shaft is disposed on the first bracket, while the second arc-shaped bracket includes an extending part and a second rotating shaft is disposed on the second bracket, which engages with a pivot hole of the first bracket. When the second arc-shaped bracket is pivoted relative to the first bracket, a distance between the first and second rotating shafts is changed. The hinge module further comprises a linking rod. The linking rod is engaged with a linear groove-shaped track of the first bracket via the first rotating shaft, which slidably glides in the linear track.

The first rotating shaft is not fixedly disposed on the first bracket, but is instead slidably supported in the linear track of the first bracket. The second rotating shaft is not engaged with a track, but is rotatably supported in a pivot hole of the first bracket. The first end of the linking rod is not pivotably supported on the first rotating shaft, but instead more or less fixedly disposed thereon.

### SUMMARY

It is an object of the disclosure to provide an efficient hinge module enabling a smooth opening and closing process of device bodies of an electronic device through rotation with less mechanical interference. It is a further object of the disclosure to provide a portable electronic device comprising such a hinge module.

These problems are solved by a hinge module as claimed by claim 1, and by a portable electronic device as claimed by claim 8. Further advantageous embodiments are the subject-matter of the dependent claims.

Based on the above, by disposing the hinge structure in the portable electronic device, the first device body and the second device body can be moved close to or away from each other through the corresponding relationship among the first rotating shaft, the second rotating shaft, and the linking rod of the hinge module when the first device body and the second device body are rotated relative to each other. In other words, the hinge module forms a configuration similar to a linkage mechanism. In this way, the second rotating shaft can be moved close to or away from the first rotating shaft when the second bracket is rotated relative to the first bracket. Accordingly, in the process where the first device body is rotated relative to the second device body to be opened or closed, the mechanical interference between the device bodies due to limitation of a fixed-type hinge or a fixed distance between rotating shafts can be avoided, and the device bodies can be opened or closed smoothly through rotation.

To make the above features and advantages of the disclosure more comprehensible, embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic view illustrating a portable electronic device according to an embodiment of the disclosure.
FIGs. 2A and 2B are schematic views illustrating a hinge module of FIG. 1 from different viewing angles.

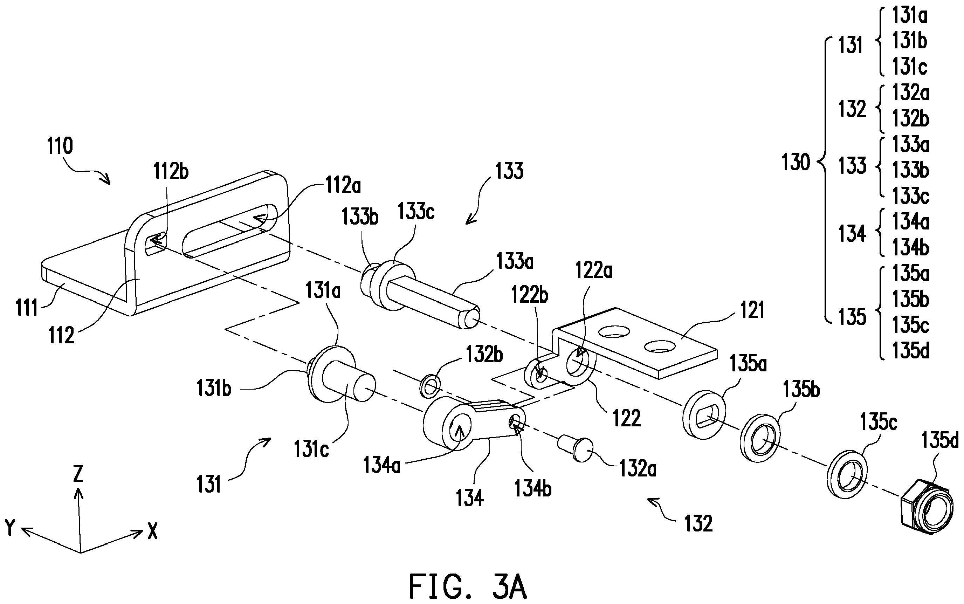

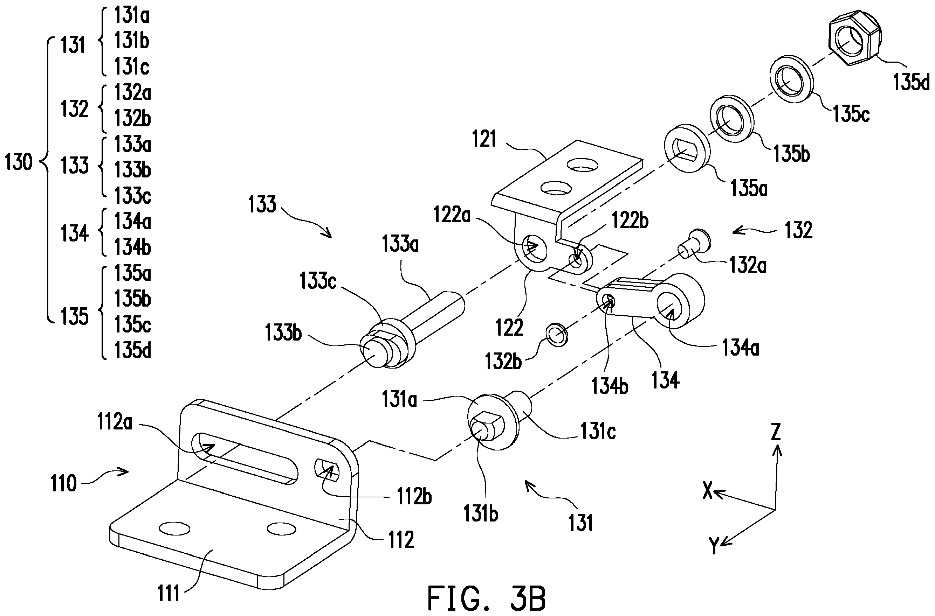

FIGs. 3A and 3B are exploded views illustrating a hinge module from different viewing angles.
FIGs. 4A to 4D are side views illustrating a hinge module in different states.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

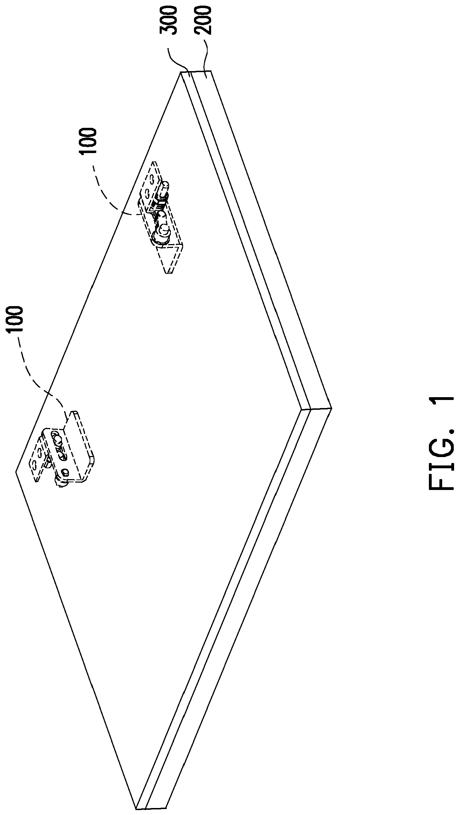

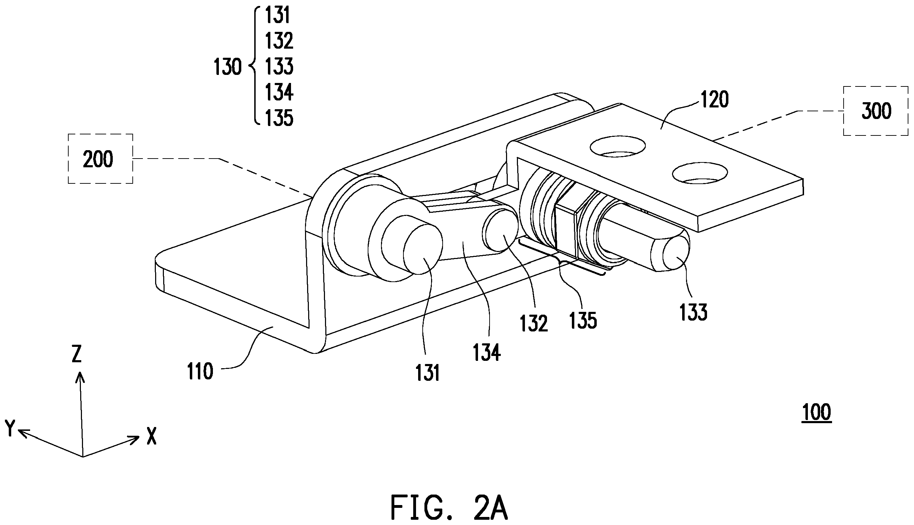

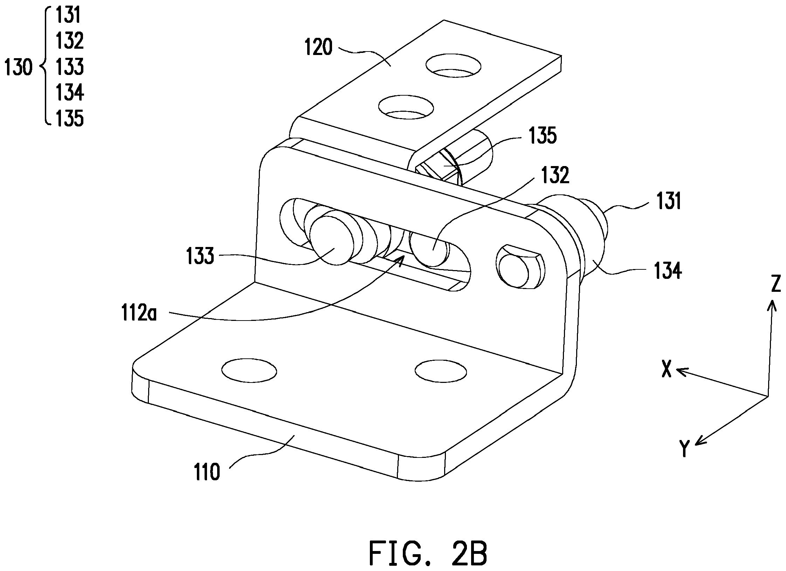

FIG. 1 is a schematic view illustrating a portable electronic device according to an embodiment of the disclosure. FIGs. 2A and 2B are schematic views illustrating a hinge module of FIG. 1 from different viewing angles. Here, a Cartesian (X-Y-Z) coordinate system is provided to more easily describe the components. Referring to FIGs. 1, 2A, and 2B, in the embodiment, a portable electronic device 10 includes a first device body 200, a second device body 300, and a hinge module 100 connected with the first device body 200 and the second device body 300. The first device body 200 and the second device body 300 are relatively rotatable with each other through the hinge module 100 to be opened or closed. The hinge module 100 includes a first bracket 110, a second bracket 120, a first rotating shaft 131, a second rotating shaft 133, and a linking rod 134. The first rotating shaft 131 is disposed on the first bracket 110, the second rotating shaft 133 is disposed on the second bracket 120, the first bracket 110 is assembled to the first device body 200, and the second bracket 120 is assembled to the second device body 300.

FIGs. 2A and 2B are schematic views illustrating a hinge module of FIG. 1 from different viewing angles. Referring to FIGs. 2A and 2B, in the embodiment, the first bracket 110 includes a bottom plate 111 and a standing plate 112. The bottom plate 111 is located on the X-Y plane and assembled to the first device body 200, and the standing plate 112 is located on the X-Z plane and has a track 112a and a positioning hole 112b. The first rotating shaft 131 has a positioning part 131b, a pressing part 131a, and a shaft part 131c. The positioning part 131b is engaged with the positioning hole 112b and positioned on the X-Z plane, and the first rotating shaft 131 abuts against the standing plate 112 along the Y-axis through the pressing part 131a being pressed against the standing plate 112. The linking rod 134 includes a first end 134a and a second end 134b which are opposite to each other and respectively have pivot holes. The first end 134a is pivotable relative to the shaft part 131c of the first rotating shaft 131.

The second bracket 120 includes a bottom plate 121 and an extending part 122 standing below the bottom plate 121. A pivot hole 122b and a shaft hole 122a are disposed on the extending part 122. The second rotating shaft 133 has a moving part 133b, a pressing part 133c, and a shaft part 133a. The shaft part 133a penetrates through the shaft hole 122a. In addition, in the embodiment, the extending part 122 is considered as being located on the X-Z plane, and the shaft direction (Y-axis direction) of the second rotating shaft 133 is orthogonal to the X-Z plane.

Moreover, the moving part 133b is movably or slidingly engaged with the track 112a of the first bracket 110, and the pressing part 133c abuts against the standing plate 112 of the first bracket 110 along the Y-axis. At the second end 134b, the linking rod 134 is arranged as a coupling structure and pivotable relative to the pivot hole 122b of the extending part 122 through a connecting assembly 132 (including components 132a and 132b riveted to each other). In addition, the extending part 122 is substantially pivotably sandwiched in the coupling structure.

Moreover, the hinge module 100 further includes a torque assembly 135 including a pressing member 135a, torque members 135b and 135c, and a locking member 135d. The shaft part 133a of the second rotating shaft 133 penetrates through the shaft hole 122a. The pressing member 135a, the torque members 135b and 135c, and the locking member 135d are sequentially disposed on the shaft part 133a of the second rotating shaft 133 and abut against the extending part 122 of the second bracket 120. Accordingly, a torque force is provided between the second bracket 120 and the second rotating shaft 133 by the torque assembly 135 through the friction force which the torque assembly 135 can generate when the second bracket 120 and the second rotating shaft 133 are pivotally rotated relative to each other on Y-axis.

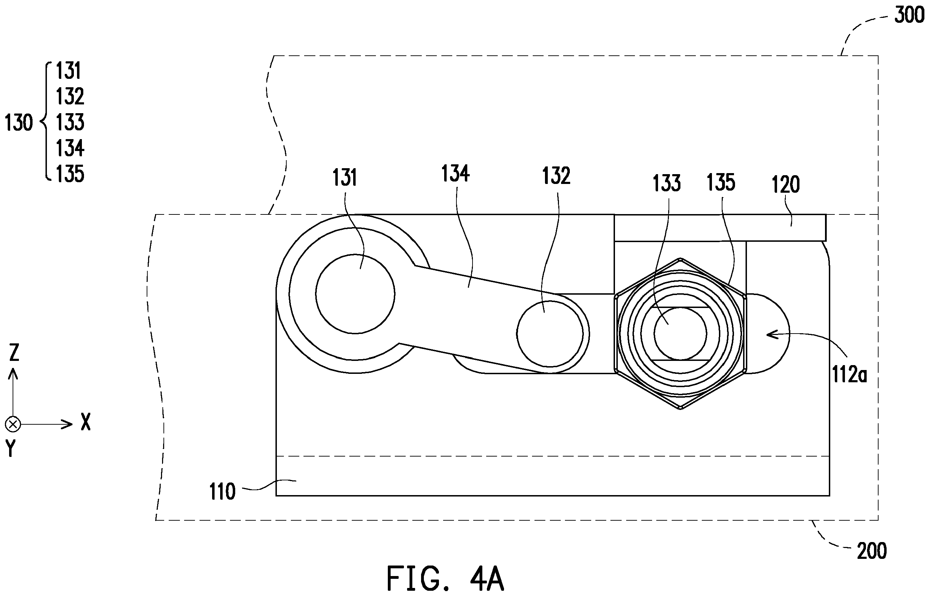

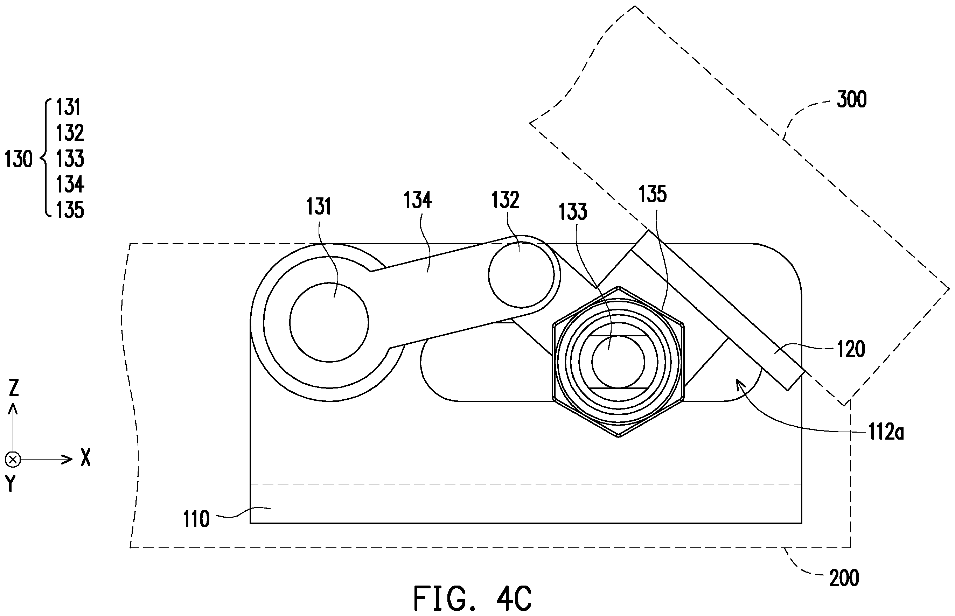

FIGs. 4A to 4D are side views illustrating a hinge module in different states. Referring to FIG. 4A, based on the configuration above, the first rotating shaft 131, the second rotating shaft 133, the connecting assembly 132, the linking rod 134, and the torque assembly 135 of the embodiment form a torque linkage mechanism 130. Since the shaft direction of the first rotating shaft 131 and the shaft direction of the second rotating shaft 133 are parallel to each other, the torque linkage mechanism 130 substantially carries out a linkage movement on the same plane (X-Z plane), as shown in FIG. 4A. Here, like the illustration of FIG. 1, FIG. 4A shows a state where the first device body 200 and the second device body 300 are folded and closed with respect to each other. In the state of Fig. 4A, the distance between the second rotating shaft 133 and the first rotating shaft 131 has the maximum value.

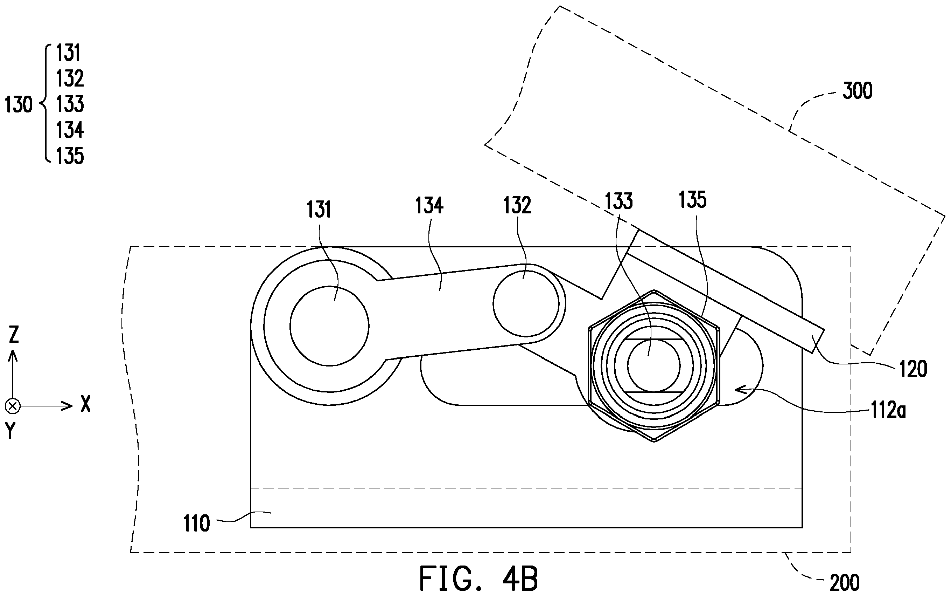

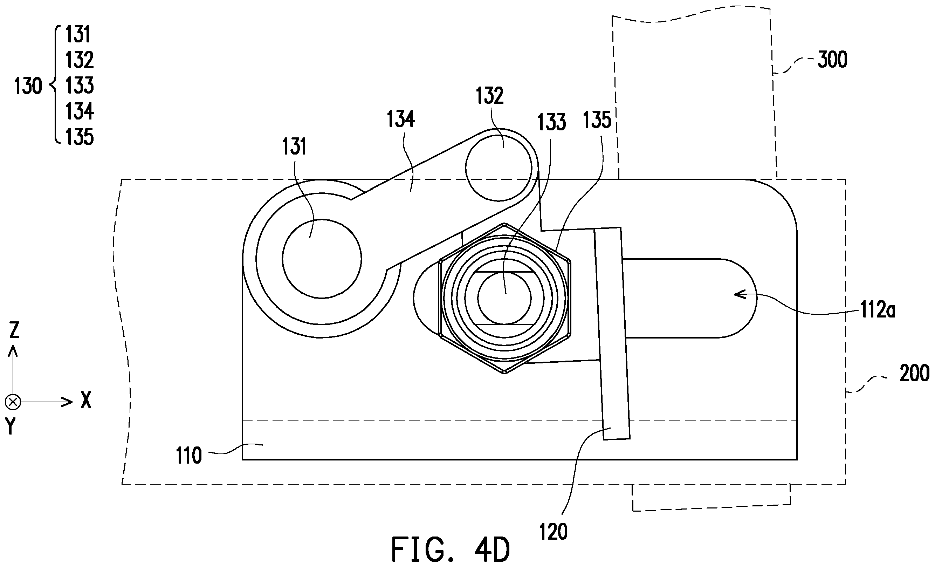

Then, referring to FIGs. 4B to 4D, the first device body 200 is pivotally rotated and expanded relative to the second device body 300. In other words, the second device body 300 is rotated in the clockwise direction with the first device body 200 serving as the reference. At this time, due to the connection relationship among the components of the torque linkage mechanism 130, the first rotating shaft 131 is rotated in the counter-clockwise direction, the second rotating shaft 133 is rotated in the clockwise direction, and the linking rod 134 is rotated in the counter-clockwise direction while simultaneously driving the second rotating shaft 133 to slide along the track 112a toward the negative X-axis direction, so as to gradually move toward the first rotating shaft 131 located at one end of the track 112a until the second rotating shaft 133 is close to the first rotating shaft 131 and the distance therebetween has the minimum value, as shown in FIG. 4D.

On the other hand, when the first device body 200 and the second device body 300 are relatively rotated and closed from the expanded state shown in FIG. 4D, the state is sequentially changed from the state shown in FIG. 4D to the state shown in FIG. 4A. That is, the second rotating shaft 133 is moved toward the positive X-axis direction along the track 112a due to the rotation of the second bracket 120, so as to move away from the first rotating shaft 131 until the second rotating shaft 133 is restored to the position shown in FIG. 4A.

In view of the foregoing, in the embodiment of the disclosure, by disposing the hinge structure in the portable electronic device, the first device body and the second device body can be moved close to or away from each other through the corresponding relationship among the first rotating shaft, the second rotating shaft, and the linking rod of the hinge module when the first device body and the second device body are rotated relative to each other. In other words, the hinge module forms a configuration similar to a linkage mechanism. In this way, the second rotating shaft can be moved close to or away from the first rotating shaft when the second bracket is rotated relative to the first bracket. Accordingly, in the process where the first device body is rotated relative to the second device body to be opened or closed, the mechanical interference between the device bodies due to limitations of a fixed-type hinge or a fixed distance between rotating shafts can be avoided, and the device bodies can be opened or closed smoothly through rotation.

## Claims

1. A hinge module (100), adapted for a portable electronic device, the hinge module (100) comprising:
a first bracket (110) comprising a track (112a);
a first rotating shaft (131) disposed on the first bracket (110);
a linking rod (134) having a first end (134a) and a second end (134b) opposite to each other;
a second bracket (120) having an extending part (122); and
a second rotating shaft (133) disposed on the second bracket (120), wherein
the second end (134b) of the linking rod (134) is pivotably coupled to the second bracket (120) via the extending part (122), and
in a process, where the first bracket (110) and the second bracket (120) are rotated relative to each other, the first rotating shaft (131) and the second rotating shaft (133) are moved close to or away from each other;
**characterized in that**
the first end (134a) of the linking rod (134) is pivotably supported on the first rotating shaft (131), wherein
the second rotating shaft (133) comprises a moving part (133b) movably and pivotably coupled to the track (112a) of the first bracket (110) and is configured to rotate with the second bracket (120) and slide in the track (112a), and
the first rotating shaft (131) is fixedly disposed on the first bracket (110) adjacent to an end of the track (112a).

2. The hinge module (100) as claimed in claim 1, wherein in the process, where the first bracket (110) and the second bracket (120) are rotated relative to each other, the moving part (133b) slides in the track (112a) and the second rotating shaft (133) is moved close to or away from the first rotating shaft (131) along the track (112a).

3. The hinge module (100) as claimed in claim 1 or 2, wherein a shaft part (133a) of the second rotating shaft (133) is configured to penetrate through a shaft hole (122a) provided in the extending part (122), wherein a shaft direction of the second rotating shaft (133) is orthogonal to a plane where the extending part (122) is located.

4. The hinge module (100) as claimed in any of the preceding claims, wherein a shaft direction of the first rotating shaft (131) is parallel to a shaft direction of the second rotating shaft (133).

5. The hinge module (100) as claimed in any of the preceding claims, further comprising a torque assembly (135) disposed on the second rotating shaft (133) and pressed against the second bracket (120).

6. The hinge module (100) as claimed in any of the preceding claims, wherein in the process, where the first bracket (110) and the second bracket (120) are rotated relative to each other, a rotating direction of the first rotating shaft (131) is opposite to a rotating direction of the second rotating shaft (133).

7. A portable electronic device (10), comprising:
a first device body (200);
a second device body (300); and
a hinge module (100) as claimed in any of claims 1 to 6, wherein the first bracket (110) is mounted to the first device body (200) and the second bracket (120) is mounted to the second device body (300), coupling the first device body (200) and the second device body (300) to each other so as to be rotatable relative to each other.

8. The portable electronic device (10) as claimed in claim 7, wherein, when the first device body (200) and the second device body (300) are folded and closed with respect to each other, a distance between the first rotating shaft (131) and the second rotating shaft (133) has a maximum value, and in the process, where the first device body (200) and the second device body (300) are expanded with respect to each other, the second rotating shaft (133) is moved to the first rotating shaft (131).

## Patentansprüche

1. Scharniermodul (100), das für eine tragbare elektronische Vorrichtung geeignet ist, wobei das Scharniermodul (100) Folgendes umfasst:
einen ersten Haltebügel (110) mit einer Führung (112a);
eine erste Drehachse (131), die an dem ersten Haltebügel (110) angeordnet ist;
eine Kopplungsstange (134) mit einem ersten Ende (134a) und einem zweiten Ende (134b), die einander gegenüberliegen;
einen zweiten Haltebügel (120) mit einem verlängerten Abschnitt (122); und
eine zweite Drehachse (133), die an dem zweiten Haltebügel (120) angeordnet ist, wobei
das zweite Ende (134b) der Kopplungsstange (134) über den verlängerten Abschnitt (122) schwenkbar mit dem zweiten Haltebügel (120) verbunden bzw. gekoppelt ist, und
bei einem Vorgang, bei dem der erste Haltebügel (110) und der zweite Haltebügel (120) relativ zueinander geschwenkt werden, die erste Drehachse (131) und die zweite Drehachse (133) nahe aufeinander zu oder voneinander weg bewegt werden;
**dadurch gekennzeichnet, dass**
das erste Ende (134a) der Kopplungsstange (134) schwenkbar an der ersten Drehachse (131) gelagert ist, wobei
die zweite Drehachse (133) einen beweglichen Abschnitt (133b) aufweist, der beweglich und schwenkbar mit der Führung (112a) des ersten Haltebügels (110) gekoppelt und so konfiguriert ist, dass dieser gemeinsam mit dem zweiten Haltebügel (120) geschwenkt wird und in der Führung (112a) gleitet, und
die erste Drehachse (131) fest an dem ersten Haltebügel (110) angrenzend an ein Ende der Führung (112a) angeordnet ist.

2. Scharniermodul (100) nach Anspruch 1, wobei bei dem Vorgang, bei dem der erste Haltebügel (110) und der zweite Haltebügel (120) relativ zueinander geschwenkt werden, der bewegliche Abschnitt (133b) in der Führung (112a) gleitet und die zweite Drehachse (133) entlang der Führung (112a) nahe auf die ersten Drehachse (131) zu oder von dieser weg bewegt wird.

3. Scharniermodul (100) nach Anspruch 1 oder 2, wobei ein Achsenabschnitt (133a) der zweiten Drehachse (133) so konfiguriert ist, dass dieser sich durch ein in dem verlängerten Abschnitt (122) vorgesehenes Achsloch (122a) hindurch erstreckt, wobei eine Achsenrichtung der zweiten Drehachse (133) senkrecht zu einer Ebene ist, in der der verlängerte Abschnitt (122) angeordnet ist.

4. Scharniermodul (100) nach einem der vorhergehenden Ansprüche, wobei eine Achsenrichtung der ersten Drehachse (131) parallel zu einer Achsenrichtung der zweiten Drehachse (133) ist.

5. Scharniermodul (100) nach einem der vorhergehenden Ansprüche, das weiterhin eine Drehmoment-Bauteilgruppe (135) umfasst, die auf der zweiten Drehachse (133) angeordnet ist und gegen den zweiten Haltebügel (120) gedrückt wird.

6. Scharniermodul (100) nach einem der vorhergehenden Ansprüche, wobei bei dem Vorgang, bei dem der erste Haltebügel (110) und der zweite Haltebügel (120) relativ zueinander geschwenkt werden, eine Drehrichtung der ersten Drehachse (131) entgegengesetzt zu einer Drehrichtung der zweiten Drehachse (133) ist.

7. Tragbares elektronisches Gerät (10), umfassend:
einen ersten Gerätekörper (200);
einen zweiten Gerätekörper (300); und
ein Scharniermodul (100) nach einem der Ansprüche 1 bis 6, wobei der erste Haltebügel (110) an dem ersten Gerätekörper (200) und der zweite Haltebügel (120) an dem zweiten Gerätekörper (300) angebracht ist, wodurch der erste Gerätekörper (200) und der zweite Gerätekörper (300) miteinander gekoppelt sind, so dass diese relativ zueinander geschwenkt werden können.

8. Tragbare elektronische Vorrichtung (10) nach Anspruch 7, wobei, wenn der erste Gerätekörper (200) und der zweite Gerätekörper (300) zusammengeklappt werden und in Bezug aufeinander geschlossen angeordnet sind, ein Abstand zwischen der ersten Drehachse (131) und der zweiten Drehachse (133) einen Maximalwert hat, und bei dem Vorgang, bei dem der erste Gerätekörper (200) und der zweite Gerätekörper (300) in Bezug aufeinander auseinander geklappt werden, die zweite Drehachse (133) zu der ersten Drehachse (131) bewegt wird.

## Revendications

1. Un module de charnière (100), adapté à un appareil électronique portable, le module de charnière (100) comprenant :
un premier bras (110) comprenant un guidage (112a) ;
un premier arbre rotatif (131) disposé sur le premier bras (110) ;
une tige de liaison (134) ayant une première extrémité (134a) et une deuxième extrémité (134b) opposées l'une à l'autre ;
un deuxième bras (120) ayant une partie d'extension (122) ; et
un deuxième arbre rotatif (133) disposé sur le deuxième bras (120), dans lequel
la seconde extrémité (134b) de la tige de liaison (134) est couplée de manière pivotante au second bras (120) par l'intermédiaire de la partie d'extension (122), et
dans un processus où le premier bras (110) et le second bras (120) sont tournés l'un par rapport à l'autre, le premier arbre rotatif (131) et le second arbre rotatif (133) sont rapprochés ou éloignés l'un de l'autre ;
**caractérisé par le fait que**
la première extrémité (134a) de la tige de liaison (134) est supportée de manière pivotante sur le premier arbre rotatif (131), dans lequel
le deuxième arbre rotatif (133) comprend une partie mobile (133b) couplée de manière mobile et pivotante avec le guidage (112a) du premier bras (110) et est configuré pour tourner avec le deuxième bras (120) et glisser dans le guidage (112a), et
le premier arbre rotatif (131) est disposé de manière fixe sur le premier bras (110) à côté d'une extrémité du guidage (112a).

2. Le module de charnière (100) selon la revendication 1, dans lequel, dans le processus où le premier bras (110) et le second bras (120) sont tournés l'un par rapport à l'autre, la partie mobile (133b) glisse dans le guidage (112a) et le second arbre rotatif (133) se rapproche ou s'éloigne du premier arbre rotatif (131) le long du guidage (112a).

3. Le module de charnière (100) selon la revendication 1 ou 2, dans lequel une partie de l'arbre (133a) du deuxième arbre rotatif (133) est configurée pour pénétrer à travers un trou d'arbre (122a) prévu dans la partie d'extension (122), dans lequel une direction d'arbre du deuxième arbre rotatif (133) est orthogonale à un plan où la partie d'extension (122) est située.

4. Le module de charnière (100) selon l'une des revendications précédentes, dans lequel la direction de l'arbre du premier arbre rotatif (131) est parallèle à la direction de l'arbre du deuxième arbre rotatif (133).

5. Le module de charnière (100) selon l'une quelconque des revendications précédentes, comprenant en outre un ensemble de couple (135) disposé sur le second arbre rotatif (133) et pressé contre le second bras (120).

6. Le module de charnière (100) selon l'une quelconque des revendications précédentes, dans lequel, dans le processus où le premier bras (110) et le second bras (120) sont tournés l'un par rapport à l'autre, un sens de rotation du premier arbre rotatif (131) est opposé à un sens de rotation du second arbre rotatif (133).

7. Un dispositif électronique portable (10), comprenant :
un premier corps de dispositif (200)
un deuxième corps de dispositif (300) ; et
un module de charnière (100) selon l'une quelconque des revendications 1 à 6, dans lequel le premier bras (110) est monté sur le premier corps de dispositif (200) et le second bras (120) est monté sur le second corps de dispositif (300), couplant le premier corps de dispositif (200) et le second corps de dispositif (300) l'un à l'autre de manière à pouvoir tourner l'un par rapport à l'autre.

8. Le dispositif électronique portable (10) selon la revendication 7, dans lequel, lorsque le premier corps de dispositif (200) et le deuxième corps de dispositif (300) sont pliés et fermés l'un par rapport à l'autre, une distance entre le premier arbre rotatif (131) et le deuxième arbre rotatif (133) a une valeur maximale, et dans le processus, lorsque le premier corps de dispositif (200) et le deuxième corps de dispositif (300) sont étendus l'un par rapport à l'autre, le deuxième arbre rotatif (133) est déplacé vers le premier arbre rotatif (131).
